# EUROPÄISCHE PATENTSCHRIFT

(11) **EP 0 428 640 B1**
(45) Veröffentlichungstag und Bekanntmachung des Hinweises auf die Patenterteilung: **25.09.1996**
(21) Anmeldenummer: 90906108.7
(22) Anmeldetag: 03.05.1990
(51) Int. Cl.: G21C 15/02, G21C 7/22, F28F 3/08

(54) **WÄRMETAUSCHER ZUR KÜHLKREISREINIGUNG**
HEAT-EXCHANGER FOR CLEANING COOLANT CIRCUITS
ECHANGEUR DE CHALEUR POUR NETTOYER DES CIRCUITS DE CALOPORTEUR

(30) Priorität: 09.05.1989 CH 1733/89; 09.05.1989 CH 1734/89
(43) Veröffentlichungstag der Anmeldung: 29.05.1991
(73) Patentinhaber: DOROSZLAI, Pal G. K., CH-5416 Kirchdorf (CH)
(72) Erfinder: DOROSZLAI, Pal G. K., CH-5416 Kirchdorf (CH)
(74) Vertreter: Schick, Carl
(86) Internationale Anmeldenummer: CH9000120
(87) Internationale Veröffentlichungsnummer: WO9013899

(56) Entgegenhaltungen:
- WO-A-86/01632
- DE-A- 3 244 547
- GB-A- 1 565 817
- US-A- 2 872 165

## Beschreibung

Es sind mit Leichtwasser moderierte und gekühlte Kernreaktoren bekannt, deren Kühlung einzig und allein durch Naturzirkulation des Kühlmittels erfolgt. Bekannt ist insbesondere ein Kernreaktorkonzept, nach welchem in dem Kühlkreis das aufsteigende, im Reaktorkern erwärmte Kühlwasser infolge Verminderung des hydrostatischen Druckes ausdampft. Dieser Ausdampfvorgang treibt die Naturzirkulation an.

Eine Kernreaktoranlage dieser Art ist aus der PCT-Anmeldung WO 86/01632 bekannt. Diese Kernreaktoranlage weist einen in einem Pool angeordneten Reaktor und eine nach unten offene Dampfglocke auf. Im Innenraum der Glocke sind ein Teller oder Kondensatbehälter und ein Kondensator angeordnet. Der Kühlkreis des Reaktors umfasst eine Steigleitung und eine Rückführleitung. Ein Wärmetauscher ist vorgesehen, dessen Primärseite mit der Steigleitung und dessen Sekundärseite mit einem Rohrmantel-Raum verbunden sind. Der Rohrmantel-Raum funktioniert als eine zweite Steigleitung, die unten gegen den Pool offen und oben mit dem Innenraum der Dampfglocke unterhalb des Tellers verbunden ist.

Ein Nachteil dieser Reaktoranordung ist, dass eine kontinuierliche Zirkulation des Kühlkreises nur in einem bestimmten Leistungsbereich gewährleistet ist. Unterschreitet die erzeugte Leistung eine bestimmte Grenze, so bricht die kontinuierliche Umwälzung und damit die gleichmässige Kühlung des Reaktorkerns zusammen.

Es ist daher Aufgabe der vorliegenden Erfindung diesen Nachteil zu beseitigen. Die Erfindung sichert die kontinuierliche und stetige Naturzirkulation des Kühlkreises im gesamten Lastbereich zusammen mit der Dampferzeugung aus Poolwasser für den Verdünnungsvorgang der Leistungsregelung.

Zu diesem Zweck sind erfindungsgemäss zwei Steigleitungen derart vorgesehen, dass sie selbst als Primärseite bzw. als Sekundärseite einer sich nach oben erstreckenden Wärmetauscher-Einrichtung ausgebildet sind.

Das Niveau des Poolwassers unter der Dampfglocke stellt sich entsprechend dem Gleichgewicht zwischen dem erzeugten und dem kondensierenden Dampf ein. Dieses Gleichgewicht wird durch die Leistungsregelung eingestellt, welche den Gehalt an gelösten Neutronenabsorbern (Borsäure) des gleichzeitig auch als Moderator dienenden Kühlwassers anpasst.

Im Kondensator wird je nach Bedarf Nutzwärme entnommen. Innerhalb bestimmter Grenzen kann die Leistungsregelung die Reaktorleistung diesem Bedarf anpassen. Wird im Kondensator zuviel Wärme und zu schnell entnommen, so steigt das Poolwasser unter der Glocke und überflutet den Teller. Da das Poolwasser an gelösten Neutronenabsorbern nahezu gesättigt ist, führt diese Überflutung des Kühlkreises zur Abschaltung des Reaktors. Wird im Kondensator zu wenig, oder plötzlich gar keine Wärme mehr entnommen, so wird das Poolwasser aus der Dampfglocke gedrängt. Das Absinken des Niveaus unter der Glocke ist nach unten durch ein U-Rohr begrenzt. Ein Schenkel dieses U-Rohrs reicht in den Dampfraum unter der Glocke, der andere Schenkel in das umgebende, kalte Poolwasser. Erreicht das absinkende Niveau unter der Glocke den Krümmer des U-Rohrs, so wird der Dampf aus der Glocke in den kalten Pool abgeführt und der Teller vom hochsteigenden Poolwasser überflutet, was wiederum zur Unterbrechung der Leistungserzeugung im Reaktorkern führt.

Ein weiterer Nachteil des in der PCT-Patentanmeldung WO 86/01 632 beschriebenen Reaktors ist, dass der Abschaltvorgang relativ lange dauert. Wird das Poolwasser nämlich aus der Glocke gedrängt, so ist damit eine Erhöhung des Druckes unter der Glocke verbunden. Das Dampf-Abblas-U-Rohr ist ja in seiner Funktionsweise eigentlich nichts anderes als das altbekannte und bewährte Standrohr zur Druckbegrenzung, das als Sicherheitsventil funktioniert. Mit steigendem Druck wird zusätzlich Energie im eine Sättigungstemperatur aufweisenden Wasser (Primärkreislauf und obere Schichten des Poolwassers unter der Dampfglocke) gespeichert. Beim Dampf-Abblasvorgang durch das U-Rohr muss nicht nur die laufend im Reaktor erzeugte Energie als Dampf in den kalten Pool abgeführt werden, sondern zusätzlich jene Energie, welche dem Druckunterschied zwischen Dampf-Abblasbeginn und Überflutung des Tellers entspricht und während des Abblasens durch Ausdampfen freigesetzt wird. Wird eine Kernreaktoranlage des beschriebenen Typs mit dem nachstehend beschriebenen Abschaltbehälter und mit zwei zugehörigen Leitungen gemäss einem Ausführungsbeispiel der Erfindung ausgerüstet, so wird die Energieerzeugung im Reaktorkern praktisch gleichzeitig mit dem Beginn des Abblasens unterbrochen. Dies erfolgt, indem das untere Ende einer der beiden Leitungen, das heisst, der Belüftungsleitung, vom absinkenden Wasserniveau freigesetzt wird, so dass durch diese Leitung Dampf hochsteigen kann und in der Folge der an Neutronengiften reiche Inhalt des Abschaltbehälters durch die andere Leitung in den Kühlkreis abfliesst.

Ein weiterer sicherheitstechnischer Mangel der zuerst beschriebenen Kernreaktoranordnung wird durch ein Ausführungsbeispiel der Erfindung beseitigt. Bei einem kleinen Leck des Primärkreises kann dessen Wasserinhalt vermindert werden, ohne dass es unmittelbar zur Abschaltung kommen würde. Mit einer zur Belüftungsleitung parallelen Füllkontrolleitung kann gemäss einem Ausführungsbeispiel der Erfindung der Füllungsgrad des Kühlkreises auf einfache Art überwacht werden. Ähnlich wie bei absinkendem Niveau das untere Ende der Belüftungsleitung unter der Dampfglocke freigesetzt wird, wird das untere Ende dieses Kontrollrohrs bei langsamem Entleeren des Kühlkreises freigesetzt, was wiederum zur Einleitung des Abschaltvorganges führt.

### Verzeichnis der Figuren:

- Figur 1: zeigt eine Prinzipskizze einer erfindungsgemässen Kernreaktoranlage mit einem Wärmetauscher.
- Figur 2: zeigt die Einlaufpartie des Wärmetauschers und die Anordnung der Wärmetauscherplatten, der Endplatten und der Dichtungselemente.
- Figur 3: zeigt die Austrittsöffnungen des Wärmetauschers, ihre relative Lage zum Teller und die Erweiterung der Breite zwischen den Endplatten.
- Figur 4: zeigt die Anordnung der Dichtungselemente zwischen den Platten zur Unterteilung in einzelne, parallele Kanäle
- Figur 5: zeigt die variable Rillenteilung über die Wärmetauscherhöhe.
- Figur 6: zeigt eine Prinzipskizze zur Erläuterung des verbesserten dynamischen Verhaltens bei Schnellabschaltung einer Kernreaktoranlage gemäss der Erfindung.
- Figur 7: zeigt eine Prinzipskizze zur Erläuterung des Schnellabschaltverfahrens gemäss einer weiteren Ausführung der verbesserten Kernreaktoranlage nach der Erfindung.

### Beschreibung der Erfindung:

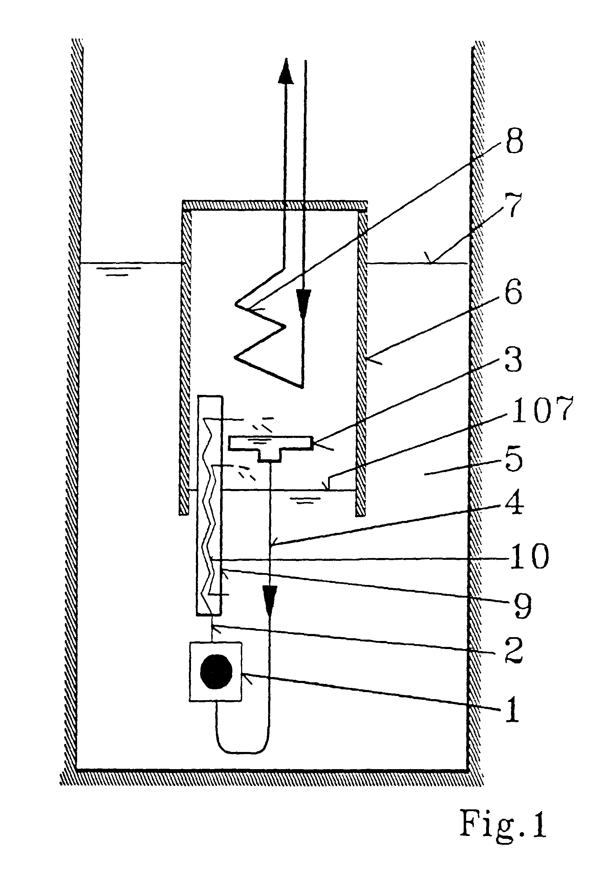

Die vorliegende Erfindung betrifft eine Einrichtung für den Wärmeaustausch zwischen Kühlkreis und Poolwasser, die zur Stabilisierung der Naturzirkulation im Kühlkreis, und zwar im gesamten Leistungsbereich der Kernreaktoranlage, und zur Dampferzeugung aus Poolwasser für den Verdünnungsvorgang dient. Figur 1 zeigt die Kernreaktoranlage mit der erfindungsgemässen Einrichtung. Aus dem Kernreaktor 1 steigt erwärmtes Wasser in der Steigleitung 2 hoch. Infolge Verminderung des hydrostatischen Druckes einerseits und Strömungsdruckabfall andererseits kommt es dabei zur Dampfbildung. Die Steigleitung 2 endet über dem Teller 3. Das Kühlwasser wird in dem Teller 3 gesammelt und durch die Rückführleitung 4 zum Kernreaktor 1 zurückgeführt. Die Naturzirkulation des Kühlkreises durch Kernreaktor 1, Steigleitung 2, Teller 3 und Rückführleitung 4 wird intensiv angetrieben durch die Dampfbildung in der Steigleitung 2. Die ganze Anordnung des Kühlkreises, bestehend aus Kernreaktor 1, Steigleitung 2, Teller 3 und Rückführleitung 4 ist in einen mit Wasser gefüllten Pool 5 getaucht. Der Teller 3 befindet sich im Innenraum einer nach unten offenen Dampfglocke 6. Der sich in der Steigleitung 2 bildende Dampf drängt das Poolwasser in der Dampfglocke 6 nach unten, bis das Niveau 107 des Poolwassers in der Dampfglocke 6 sich unterhalb des Tellers 3 befindet, wobei im Normalbetrieb der Kühlkreis und das Poolwasser voneinander getrennt bleiben.

Das Poolwasser ist an gelösten, neutronenabsorbierenden Stoffen (Borsäure) nahezu gesättigt. Im Kühlkreis wird die Konzentration solcher Stoffe durch die Leistungsregelung eingestellt, und im Normalbetrieb ist sie gegenüber dem Poolwasser stark vermindert. Die Regelung der Reaktorleistung, resp. der Reaktivität erfolgt allein durch die Anpassung der Konzentration an gelösten Neutronenabsorbern im Kühlkreis. Regelgrösse ist dabei das Poolwasserniveau 107 unter der Dampfglocke.

Ebenfalls unter der Dampfglocke 6, jedoch über dem Teller 3, ist der Kondensator 8 angeordnet. An der Oberfläche dieses Kondensators 8 kondensiert der in der Steigleitung 2 gebildete Dampf. Die Kondensationswärme wird einem weiteren Kreislauf als Nutzwärme abgegeben. Das Kondensat fliesst in den Teller hinunter und vermischt sich mit dem Wasser des Kühlkreises.

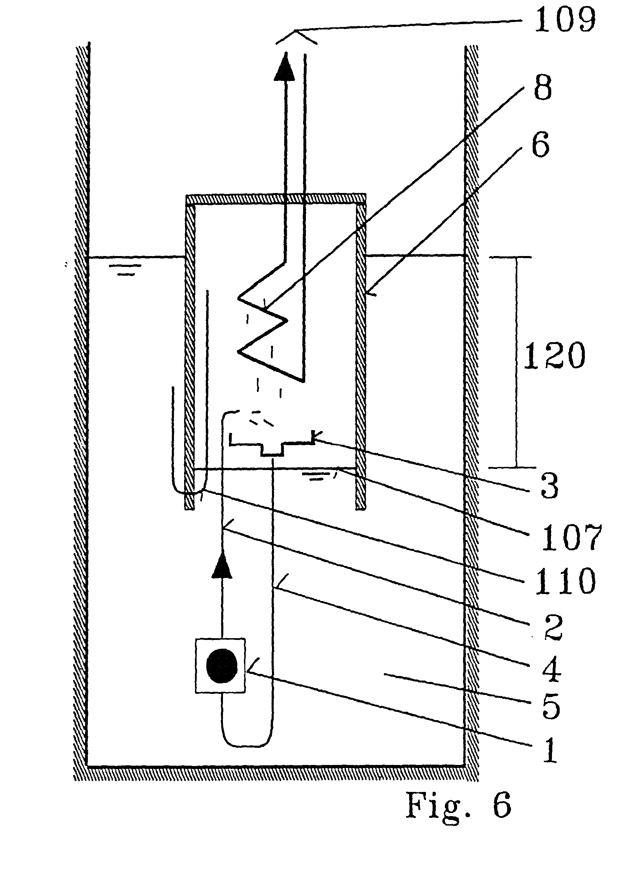

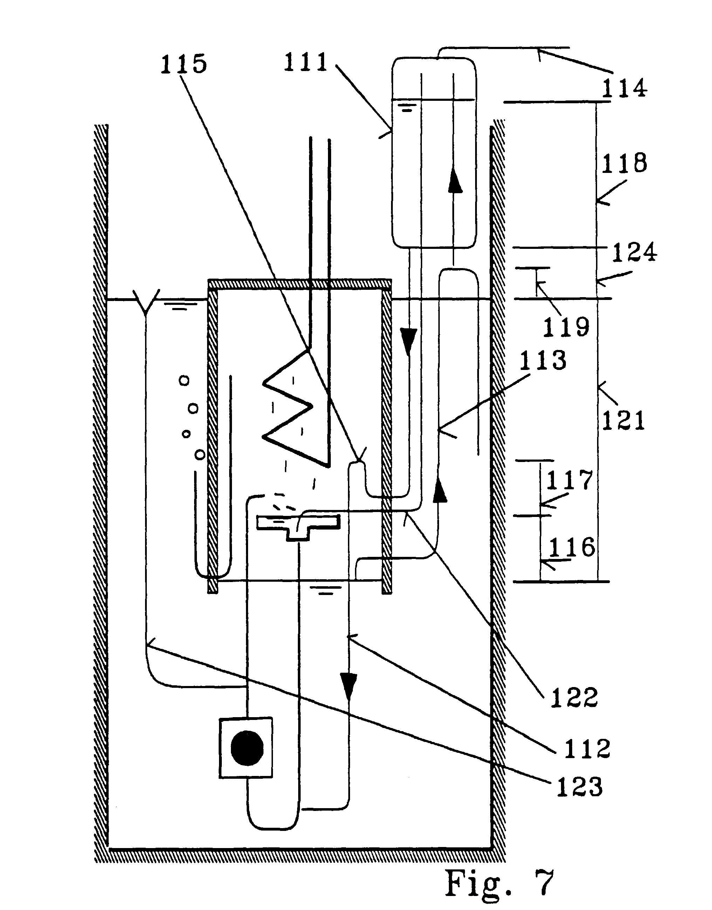

Die Dampfglocke 6, der Kernreaktor 1, die Steigleitung 2 und die Rückführleitung 4 sind gegenüber dem Poolwasser thermisch isoliert. Im Normalbetrieb liegt die Temperatur des Poolwassers erheblich unter der Kondensationstemperatur, welche unter der Dampfglocke 6 herrscht. Dieser Temperaturunterschied ist im Wasserbereich unter der Dampfglocke 6 durch Schichtung des wärmeren Wassers über das kältere ausgeglichen. Die Arbeitsweise der Anlage wird anhand der Figur 6 bzw. 7 erläutert, in denen der Wärmetauscher nicht dargestellt ist.

Im Normalbetrieb (Fig. 6) werden Änderungen des Wärmebedarfes durch die Leistungsregelung des Kernreaktors so ausgeregelt, dass das Niveau 107 (Fig. 6) unter der Dampfglocke 6 ständig unter dem Teller 3 bleibt. Die Regelung der erzeugten Leistung erfolgt durch die Anpassung der Konzentration des Kühlkreiswassers an gelösten Neutronenabsorbern (Borsäure). Diese Anpassung erfolgt durch zwei gleichzeitig wirksame Prozesse: den Verdünnungsvorgang und die Zufuhr von Poolwasser. Je nachdem, ob mehr oder weniger Leistung erzeugt werden soll, überwiegt der eine oder der andere Prozess.

Der Verdünnungsprozess besteht in der Erzeugung von Dampf aus Poolwasser, der sich zusammen mit dem im Kühlkreis erzeugten Dampf am Kondensator 8 niederschlägt. Überflüssiges Wasser fliesst zur Volumen-Kompensation über den Rand des Tellers 3 aus dem Kühlkreis in den Pool 5 zurück. Da der Gehalt an Neutronenabsorbern des aus dem Kühlkreis austretenden Wassers der durchschnittlichen Konzentration des Kühlkreises entspricht, das dem Kühlkreis zugeführte, vom Kondensator 8 in den Teller 3 fliessende, zusätzliche Kondenswasser dagegen rein von Neutronenabsorbern ist, entsteht insgesamt ein Verdünnungseffekt.

Der Dampf aus Poolwasser wird dadurch erzeugt, dass im Wärmetauscher 9 Poolwasser, das sich in der Steigleitung 10 befindet, durch den Kühlkreis 2 erhitzt wird, derart, dass dieses Wasser in der Steigleitung 10 hochsteigt und infolge Verminderung des hydrostatischen Druckes, ähnlich wie im Kühlkreis, ausdampft. Der Wärmetauscher 9 wird demnach durch die beiden Steigleitungen 2 und 10 des Kühlkreises bzw. des Verdünnungsprozesses gebildet.

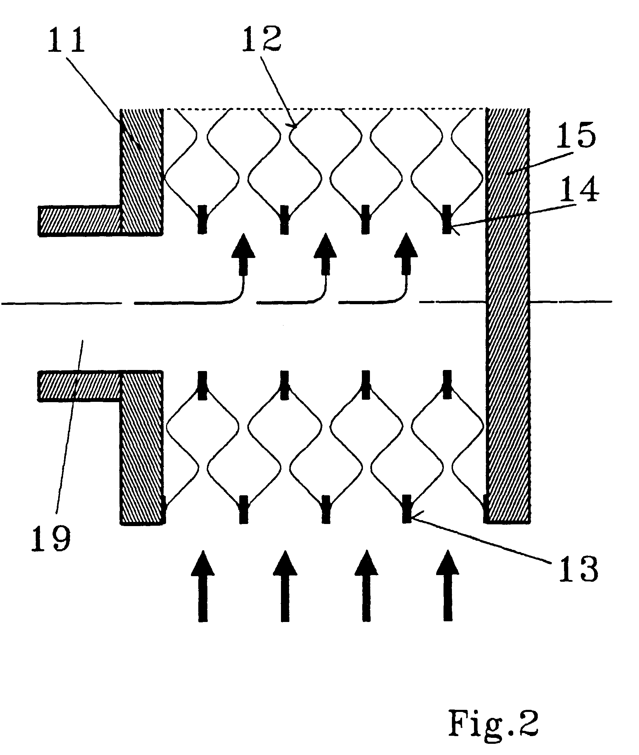

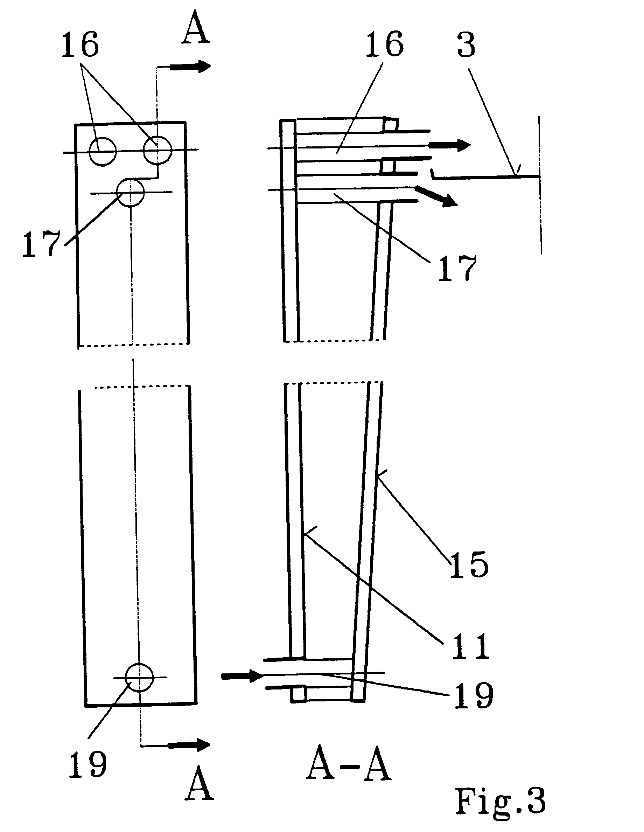

Als Wärmetauscher 9 kann eine spezielle Ausführung des an sich bekannten Plattenwärmetauschers dienen. Die beiden Massenströme, die über die Steigleitung 2 bzw. über die Steigleitung 10 fliessen, werden parallelgeführt. Die Zuteilung der Zwischenräume zwischen den einzelnen Platten 11, 15 wird durch die abwechslungsweise Anordnung von Dichtungselementen zwischen den Platten bewirkt. Dies ist in der Figur 2 für die Eintrittspartie gezeigt. Die Dichtungselemente 13 lassen die Zwischenräume für den Poolwasser-Eintritt frei. Die Dichtungselemente 14 um die Kühlwasser-Eintrittsöffnung 19 lassen die Zwischenräume für den Kühlwasserdurchfluss frei. Wie beispielsweise in Figur 2 gezeigt, wird jeder zweite Zwischenraum zwischen den Platten vom Poolwasser für den Verdünnungseffekt durchströmt. Üblicherweise wird jeder dritte Zwischenraum für das Poolwasser benützt. Platten und Dichtungselemente sind zwischen den beiden Endplatten 11 und 15 eingeklemmt. Die Dampfbildung findet in beiden Strömen im Wärmetauscher statt. Um die Volumenzunahme durch Dampfbildung teilweise zu kompensieren, ist der Abstand zwischen den Platten 11 und 15 nach oben kompensiert, wie es in Figur 3, Schnitt A-A gezeigt wird. In dieser Figur 3 sind auch die Austrittsöffnungen 16 und 17 für den Kühlkreis bzw. für das Poolwasser gezeigt. In diesem Beispiel sind zwei Öffnungen für den Kühlkreis und nur eine für das Poolwasser vorgesehen. Die beiden Öffnungen 16 für den Kühlkreis münden über den Rand des Tellers 3. Die Öffnung für den Poolwasseraustritt liegt unterhalb des Tellers, knapp über dem Poolwasserniveau in der Glocke.

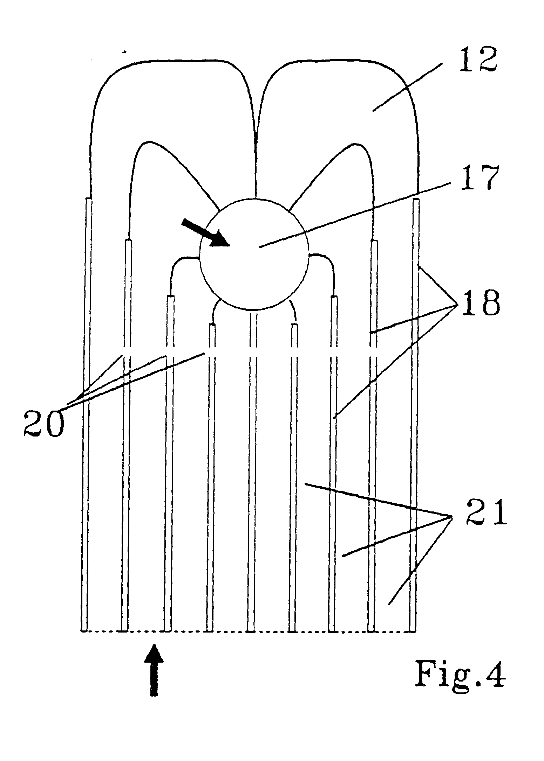

Die Zwischenräume zwischen den Platten, wo das Wasser der beiden Massenströme hochsteigt, sind durch weitere Dichtungselemente 18 in mehrere parallele Kanäle 19 unterteilt, wie es in der Figur 4 für die Zwischenräume der Poolwasserseite gezeigt ist. Alle diese Kanäle 21 kommen erst in den Austrittsöffnungen zusammen. Auf diese Weise ist der Wärmetauscher für beide Massenströme in eine grössere Anzahl paralleler Kanäle unterteilt. Bei Schwachlast beginnt die Dampfbildung nacheinander in den einzelnen Kanälen, so dass sich mit der Leistung auch eine kontinuierliche Zunahme des Gesamtdurchflusses ergibt.

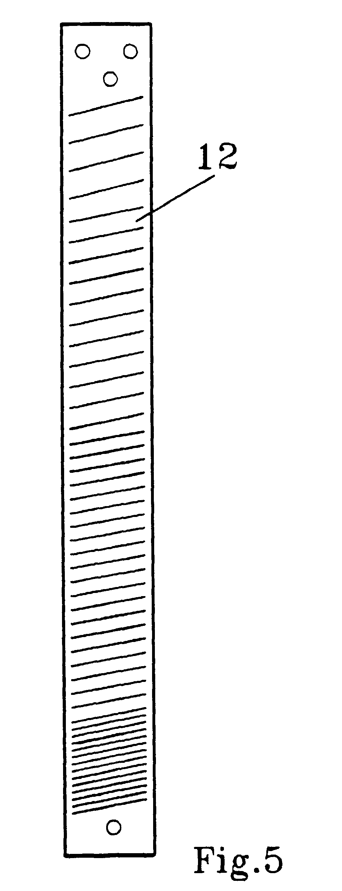

Die Rillentiefe und die Rillenteilung der Platten nehmen nach oben zu, so dass der Widerstandskoeffizient der Strömung abnimmt. Die Teilung und die Tiefe der Rillen der Wärmetauscherplatten 12 (Fig. 5) ist über die Höhe variabel. Unten beginnt es mit feiner Rillung, entsprechend der gewöhnlichen Rillung von Wärmetauscherplatten. Die Rillentiefe bleibt zunächst über eine gewisse Strecke konstant, dann wird sie etwas gröber. Nach einer gewissen Strecke wird sie nochmals gröber. Die Zunahme der Rillentiefe und der Teilung ist der Zunahme der Plattenabstände etwa proportional. Über die ganze Länge des Wärmetauschers sind typischerweise 3 bis 5 Abschnitte mit zunehmender Rillentiefe vorhanden. Durch Veränderung der Rillen wird der Druckabfallkoeffizient der Zweiphasenströmung beeinflusst.

Quer über die Trennungsdichtungen zwischen den vertikalen Kanälen sind auf der Höhe des unteren Randes der Austrittsöffnungen dünne Kanäle eingelegt, welche den Niveauausgleich bei schwacher oder bei nahezu stillstehender Strömung ermöglichen, deren Durchfluss jedoch bei ausgebildeter, kräftiger Zweiphasenströmung vernachlässigbar ist. Diese Kanäle schaffen durch langsamen Niveauausgleich identische Anlaufbedingungen für alle Kanäle.

Figur 6 zeigt eine Kernreaktoranlage, deren Eigenschaften die Erfindung wesentlich verbessert. Aus Platzgründen wurde in Figur 6 der erfindungsgemässe Wärmetauscher nicht dargestellt.

Im Normalbetrieb werden Änderungen des Wärmebedarfes durch die Leistungsregelung des Kernreaktors so ausgeregelt, dass das Niveau 107 unter der Dampfglocke 6 ständig unter dem Teller 3 bleibt. Die Anpassungsgeschwindigkeit der Leistungsregelung ist jedoch begrenzt. Bei zu schnellem Anstieg des Leistungsbedarfes wird der Teller 3 vom Poolwasser überflutet. Der höhere Gehalt an Neutronenabsorbern des Poolwassers führt in der Folge zur Abschaltung der Wärmeerzeugung im Kernreaktor. Im umgekehrten Fall, bei plötzlicher Abnahme des Nutzwärmebedarfes sinkt das Niveau 107 unter der Dampfglocke 6. Das Absinken des Niveaus 107 wird durch das U-Rohr 110 (Fig. 6) begrenzt. Sinkt das Niveau 107 unter den Krümmer des U-Rohres 110, so entweicht der Dampf aus der Dampfglocke 6 durch das U-Rohr 110 in den kalten Pool, wo es kondensiert. Dieser Vorgang geht solange, bis das obere Ende des in den Dampfraum unter der Dampfglocke 6 reichenden Astes des U-Rohres 110 überflutet wird. Bereits vorher wird jedoch der Teller 3 überflutet, so dass es auch in diesem Falle zur Abschaltung der Wärmeerzeugung im Kernreaktor kommt (bis auf die Restleistung der Nachzerfallswärme).

Im Normalbetrieb ist der Druck unter der Dampfglocke 6 um die hydrostatische Niveaudifferenz 120 (Fig. 6) höher als über der Oberfläche des Pools. Im Moment, da der Dampf aus der Dampfglocke 6 durch das U-Rohr 110 in den kalten Pool zu entweichen beginnt, ist die hydrostatische Niveaudifferenz 121 (Fig. 7) grösser als im Normalbetrieb. Diese Niveaudifferenz ist im Moment der Überflutung des Tellerrandes während des Abschaltvorganges jedoch bereits kleiner als im Normalbetrieb. Dies bedeutet, dass der Dampfdruck und damit die Sättigungstemperatur unter der Dampfglocke 6 während des Abschaltvorganges bis zum Beginn des Abblasens in den kalten Pool zunächst zunimmt, um anschliessend wieder abzunehmen. Beide Effekte verzögern die Überflutung des Tellers 3 und damit die Leistungsabschaltung.

Zunächst wird Energie gespeichert, indem der Kühlkreis und auch die oberen Schichten des Poolwassers unter der Glocke 6 erwärmt werden. Diese Erwärmung entspricht der Zunahme der Sättigungstemperatur mit steigendem Druck. Anschliessend wird der Druck reduziert, so dass es zu zusätzlicher Dampfbildung kommt. Dies bedeutet, dass zusätzlich zur nach wie vor unverändert durch die Reaktorleistung erzeugten Dampfmenge auch noch der durch die Ausdampfung entstehende Dampf durch das U-Rohr abgeführt werden muss.

Die in der Figur 7 gezeigte Ergänzung der bisher beschriebenen Anlage beschleunigt den Abschaltvorgang ganz wesentlich. Wie ersichtlich, ist über dem Kondensator 8 (Fig. 1) der mit Poolwasser nahezu vollständig gefüllte Abschaltbehälter 111 (Fig. 7) angebracht. Aus dem Boden dieses Abschaltbehälters 111 führt die Flutleitung 112 zum Kühlwassereintritt des Kernreaktors. Aus dem mit Gas gefüllten oberen Teil des Abschaltbehälters 111 führt die Belüftungsleitung 113 in den Raum unter der Dampfglocke, wo es nach unten offen auf gleicher Höhe mit dem Krümmer des U-Rohres 110 (Fig. 6) endet. Der Abschaltbehälter 111 wird mit Poolwasser gefüllt, indem daraus die anfängliche Gasfüllung durch das Abzugsrohr 114 abgesaugt wird. Die Flutleitung 112 wird durch den Dampfraum unter der Dampfglocke geführt. Sie ist im Innenraum der Dampfglocke als Siphon 115 ausgebildet und nicht isoliert. Dies bewirkt, dass sie sich auf Sättigungstemperatur erwärmt und es darin zur Dampfbildung kommt, bis das Wasserniveau sich in der Flutleitung 112 etwa auf der Höhe des Tellerrandes einstellt. Die Wassersäule in der Flutleitung 112 ist demzufolge über die Höhendifferenz 117 unterbrochen. Dies ist wesentlich, damit der Kühlkreisinhalt variabler und niedriger Konzentration an neutronenabsorbierenden Stoffen im Normalbetrieb getrennt vom Inhalt höherer Konzentration des Abschaltbehälters 111 bleibt. Nur so bleibt die Abschaltbereitschaft mit Sicherheit erhalten.

Im Moment des Beginns des Abschaltvorganges ist das Wasserniveau 107 (Fig. 6) unter der Glocke um die Niveaudifferenz 116 niedriger als der Teller. Die wirksame Niveaudifferenz 118 zur Flutung des Kühlkreises aus dem Abschaltbehälter 111, resp. der effektive Unterdruck im Abschaltbehälter 111 relativ zum Poolwasserniveau, ist um diese Differenz 124 (gleich der Differenz 116) kleiner, als die geometrische Differenz zwischen dem Wasserspiegel im Abschaltbehälter 111 und dem Wasserspiegel des Pools. Das Wasser würde in der Belüftungsleitung 113 demzufolge um diese Differenz 118 über dem Poolniveau stehen, wäre die Flutleitung 112 durchgehend mit Wasser gefüllt. Da jedoch die Flutleitung 112 über die Höhendifferenz 117 nicht gefüllt ist, steht das Wasser in der Belüftungsleitung 113 nur um die Differenz 119 über dem Poolniveau, welche um die Höhendifferenz 117 kleiner ist als die Niveaudifferenz 118. Die genaue Lage des Wasserspiegels in der Belüftungsleitung 113 ist wesentlich, da diese Leitung zur Beschleunigung des Entleerens unterhalb von diesem Punkt doppelt geführt wird. Die Verzweigung darf demnach höchstens um die Niveaudifferenz 119 über dem Poolniveau liegen, damit die beiden nach unten führenden Zweige zusammen mit der Abzweigung ständig mit Wasser gefüllt bleiben. Wird das nach unten gerichtete Ende der Belüftungsleitung 113 im Moment des Beginns des Abschaltvorganges vom Poolwasserniveau 107 unter der Dampfglocke freigesetzt, so fliesst das Wasser über den anderen Zweig sofort aus der Leitung, womit die Belüftung und das Entleeren des Abschaltbehälters 111 eingeleitet werden.

Der Unterdruck im Abschaltbehälter 111 entsprechend der Niveaudifferenz 118 wird durch die aktive Massnahme des Gasabzuges bewirkt und aufrechterhalten. Die Auslösung der Überflutung wird jedoch passiv durch die Überproduktion von Dampf ausgelöst. Auch die Betriebsbereitschaft der Schnellabschaltung, d.h. der Füllungsgrad des Abschaltbehälters wird im Betrieb rein passiv durch den Kontrolltrichter 123 überwacht. Der Kontrolltrichter gewährleistet, dass der Normalbetrieb der Anlage nur bei gefülltem Abschaltbehälter möglich ist. Wäre z.B. der Abstellbehälter 111 zur Zeit des Beginns des Abstellvorganges, d.h. entsprechend der in der Figur 7 gezeigten Lage des Wasserniveaus 107 (Fig. 6), bereits leer, so wäre das Poolniveau entsprechend dieser Wassermenge höher und der Kontrolltrichter 123 vom Poolwasser überflutet. Der Einlass der Leitung des Kontrolltrichters 123 erfolgt an einer verengten Stelle der Steigleitung 2 auf solche Art, dass der dynamische Druckabfall resp. die Saugwirkung der Strömung die Höhendifferenz 116 übersteigt und der Zufluss zum Kühlkreis gewährleistet ist. Sowohl die Auslösung des Abstellvorganges als auch die Überwachung der Betriebsbereitschaft werden gemäss der Erfindung durch rein passive, natürlich sichere Art gewährleistet.

Die Erfindung erfüllt eine weitere sicherheitstechnisch wichtige Bedingung. Aus dem oberen, mit Gas gefüllten Teil des Abschaltbehälters führt eine Füllkontrolleitung 122 parallel zur Belüftungsleitung 113 bis auf die Höhe des Tellers, tritt auf dieser Höhe in die Dampfglocke ein und führt weiter in die Ablasserweiterung des Tellers. Bei irgend einem kleinen Leck des Kühlkreises sinkt das Niveau im Teller und das Ende dieser Füllkontrolleitung wird freigesetzt, womit der Abschaltbehälter durch die Füllkontrolleitung belüftet und die Flutung des Kühlkreises aus dem Abschaltbehälter eingeleitet wird, noch lange bevor die Zirkulation im Kühlkreis infolge Wassermangel zusammenbrechen könnte. Die aus der Wasserfüllung des Tellers ragende Strecke der Füllkontrolleitung 122 ist bis zur Wand der Dampfglocke isoliert, damit jede, in diesem Fall nicht gewünschte Dampfbildung in der Füllkontrolleitung 122 unterbunden bleibt.

Der Wärmetauscher als erfindungsgemässe Einrichtung wirkt somit zwischen dem Kühlkreis eines mit Leichtwasser moderierten und gekühlten Kernreaktors einerseits und dem Wasser jenes Pools, in welchen der gesamte Kühlkreis getaucht ist andererseits. In dem Wärmetauscher entsteht sowohl kühlkreisseitig als auch poolwasserseitig Dampf. Der entstehende Dampf aus beiden Quellen, aus dem Kühlkreis und aus dem Poolwasser, kondensiert an der Oberfläche eines Kondensators und übergibt dabei die Nutzwärme an einen weiteren Kreislauf. Unter dem Kondensator ist ein Teller angebracht, durch welchen das Wasser des Kühlkreises fliesst und sich mit dem Kondensat vermischt. Der Wärmetauscher ist als Plattenwärmetauscher ausgebildet, wobei die Zwischenräume über die ganze Länge in mehrere parallele Kanäle unterteilt sind. Die Tiefe der Plattenrillung und die Plattenabstände nehmen über die Höhe des Wärmetauschers zu. Die Zweiphasenströmung beginnt, resp. endet sukzessive in den einzelnen Kanälen bei Laständerungen, wodurch der Gesamtdurchfluss des Kühlkreises über den gesamten Lastbereich sich stetig und eindeutig verändert.

Die erfindungsgemässe Anlage kann somit derart ausgestattet sein,
dass der Kühlkreis der Primärseite den Kernreaktor kühlt
und
dass die Leistung des Kernreaktors durch die Verdünnung beeinflusst und dieser Einfluss zur Regelung der Reaktorleistung verwendet wird.

Die Erfindung verbessert zudem das dynamische Verhalten beim Abschaltvorgang eines mit Leichtwasser moderierten und gekühlten speziellen Kernreaktors (Fig. 7), bei dem die Kühlung durch Naturzirkulation des ausdampfenden Kühlmittels erfolgt.

Innerhalb bestimmter Grenzen kann die Leistungsregelung des Reaktors nach Figur 6 dem Bedarf angepasst werden. Übersteigt die Leistungsänderungsgeschwindigkeit jedoch bestimmte Grenzen, so wird der Teller 3 und damit der Kühlkreis vom Poolwasser überflutet, welches an gelösten Neutronenabsorbern nahezu gesättigt ist. Damit führt diese Überflutung zur Abschaltung des Reaktors 1. Die Überflutung erfolgt entweder direkt, oder als Folge der Ableitung der Dampffüllung der Glocke 6 durch das Siphonrohr 110. Der Weg durch dieses Siphonrohr 110 wird frei, indem das aus der Glocke 6 gedrängte Wasser den unteren Krümmer des Siphonrohres 110 erreicht.

In weiterer Ausgestaltung der Erfindung kann bei einer Anlage nach Figur 7 der oben beschriebene Abschaltvorgang beschleunigt werden, indem aus einem über den Kondensator angeordneten Abschaltbehälter 111 Poolwasser direkt in den Kühlkreislauf geführt wird. Ausgelöst wird die Flutung durch Belüftung des relativ zum Dampfraum unter Unterdruck stehenden Abschaltbehälters 111 durch eine Belüftungsleitung 113, deren offenes Ende durch Verdrängung des Wassers aus der Glocke freigelegt wird.

Der Abschaltbehälter 111 wird auch dann in den Kühlkreis durch Selbstauslösung entleert, wenn der Teller infolge von Leckagen des Kühlkreises leerläuft. Dies wird durch eine weitere Belüftungsleitung 122 zwischen Abschaltbehälter und Teller bewirkt.

Die Betriebsbereitschaft des Abschaltbehälters wird dadurch im Sinne der Selbstkontrolle überwacht, dass der Normalbetrieb nur bei gefülltem Abschaltbehälter 111 möglich ist. Bei unvollständiger Füllung unterbindet ein Kontrolltrichter 123 durch Zufuhr vom Poolwasser zum Kühlkreis den bestimmungsgemässen Betrieb, resp. das Anfahren des Kernreaktors.

## Patentansprüche

1. Kernreaktoranlage mit einem Kernreaktor (1), der zwecks Leistungsregelung der Anlage durch Änderung der Konzentration der neutronenabsorbierenden Stoffe im Kühlmittel sich in einem mit Wasser gefüllten Pool (5) befindet, und mit einer nach unten offenen Dampfglocke (6), in deren Innenraum ein Teller (3) und ein Kondensator (8) angeordnet sind, wobei der Kühlkreis des Kernreaktors (1) eine erste Steigleitung (2), die im Innern der Dampfglocke (6) in einem Bereich oberhalb des Tellers (3) mündet, und eine Rückführleitung (4) vom Teller zurück zum Kernreaktor umfasst, dadurch gekennzeichnet, dass zur Verbesserung der Regelung der Kernreaktoranlage ein Plattenwärmetauscher (9) vorgesehen ist, derart, dass die besagte erste Steigleitung (2) selbst als Primärseite und eine weitere Steigleitung (10) als Sekundärseite des Plattenwärmetauschers (9) gebildet sind, und dass ein Ende dieser weiteren Steigleitung (10) sich im Poolwasser und ihr anderes Ende sich im Innenraum der Dampfglocke (6) in einem Bereich unterhalb des Tellers (3) befindet.

2. Kernreaktoranlage nach Anspruch 1, dadurch gekennzeichnet, dass der Plattenwärmetauscher (9) zur Stabilisierung der Naturzirkulation und zur Verdünnung des Kühlmittelkreislaufes durch Dampfbildung dient, wobei die Zwischenräume zwischen den Platten (11, 15) derart durch Dichtungselemente (13, 14) unterteilt sind, dass parallele Kanäle gebildet sind.

3. Kernreaktoranlage nach Anspruch 2, dadurch gekennzeichnet, dass der Abstand zwischen den Platten (11, 15) nach oben zunimmt, so dass der Querschnitt der einzelnen Kanäle nach oben erweitert ist, um die Volumenzunahme des ausdampfenden Kühlmittels teilweise zu kompensieren.

4. Kernreaktoranlage nach Anspruch 2 oder 3, dadurch gekennzeichnet, dass die Wärmetauscherplatten gerillt sind und dass die Tiefe der Rillung und der Abstand zwischen den Rillen kontinuierlich oder sprungweise nach oben zunehmen.

5. Kernreaktoranlage nach einem der Ansprüche 1 bis 4, gekennzeichnet durch ein U-Rohr (110) mit einem ersten Ast, der sich im Pool befindet, und mit einem zweiten Ast, der in den Dampfraum unter die Dampfglocke (6) reicht.

6. Kernreaktoranlage nach einem der Ansprüche 1 bis 5, dadurch gekennzeichnet, dass über der Dampfglocke ein relativ zum Wasserspiegel des Pools unter Unterdruck gehaltener Abschaltbehälter (111) angeordnet ist, der über eine Flutleitung (112) mit dem Kühlkreis verbunden ist und eine neutronenabsorbierende Lösung enthält, um bei unkontrollierter Überproduktion von Dampf den Kühlkreis mit dieser Lösung zu fluten, und dass der Abschaltbehälter (111) mit einer Belüftungsleitung (113) verbunden ist, deren unteres, offenes Ende in die Dampfglocke reicht, derart, dass wenn die Überproduktion von Dampf das Wasser bis zum Niveau dieses unteren, offenen Endes aus der Dampfglocke herausdrängt, dieses Ende freigelegt wird, wodurch eine selbsttätige Einleitung der Flutung bewirkt wird.

7. Kernreaktoranlage nach Anspruch 6, dadurch gekennzeichnet, dass die Flutleitung (112) unter der Dampfglocke einen Siphon (115) bildet, der gegenüber dem Dampfraum unter der Glocke nicht thermisch isoliert ist, um eine sich im Bereitschaftszustand befindende, durch eine lokale Überschreitung der Sättigungstemperatur erzeugte Dampfsperre zu bilden, die die Flutung des Kühlkreises mit dem Inhalt des Abschaltbehälters (111) bis zur Auslösung des Abschaltvorganges verhindert.

8. Kernreaktoranlage nach Anspruch 6 oder 7, dadurch gekennzeichnet, dass die Belüftungsleitung (113) einen ersten Abschnitt hat, der sich bis zum oberen, mit Gas gefüllten Teil des Abschaltbehälters (111) erstreckt, sowie einen zweiten Abschnitt aufweist, der sich nach unten bis zu einem sich ständig unter Poolwasser befindenden Bereich erstreckt.

9. Kernreaktoranlage nach einem der Ansprüche 6 bis 8, dadurch gekennzeichnet, dass eine Füllkontrolleitung (122) vorhanden ist, die den mit Gas gefüllten Raum im oberen Teil des Abschaltbehälters (111) derart mit dem Teller unter der Dampfglocke verbindet, dass bei Leerlaufen des Tellers infolge von Leckagen des Kühlkreises das untere, offene Ende dieser Füllkontrolleitung (122) freigesetzt wird, um die Flutung des Kühlkreises aus dem Abschaltbehälter, bzw. den Abschaltvorgang einzuleiten.

10. Kernreaktoranlage nach einem der Ansprüche 1 bis 9, dadurch gekennzeichnet, dass im Bereich des Wasserspiegels (7) des Pools ein Kontrolltrichter angeordnet ist, der über eine Leitung (123) mit dem Kühlkreis (2) der Anlage verbunden ist.

## Claims

1. Nuclear reactor plant with a nuclear reactor (1) which is located in a water-filled pool (5) for the purpose of regulating the power of the plant by changing the concentration of neutron-absorbing substances in the coolant, and with a downwardly open steam dome (6), in the interior of which a dish (3) and a condenser (8) are arranged, the cooling circuit of the nuclear reactor (1) comprising a first riser conduit (2), which opens inside the steam dome (6) in a region above the dish (3), and a return conduit (4) from the dish back to the nuclear reactor, characterized in that a plate heat exchanger (9) is provided for improving the regulation of the nuclear reactor plant, such that the said first riser conduit (2) itself is formed as the primary side and a further riser conduit (10) as the secondary side of the plate heat exchanger (9), and in that one end of this further riser conduit (10) is located in the pool water and its other end is located in the interior of the steam dome (6) in a region below the dish (3).

2. Nuclear reactor plant according to Claim 1, characterized in that the plate heat exchanger (9) serves for stabilizing the natural circulation and for diluting the coolant circuit by steam formation, the interspaces between the plates (11, 15) being subdivided by sealing elements (13, 14) in such a way that parallel ducts are formed.

3. Nuclear reactor plant according to Claim 2, characterized in that the spacing between the plates (11, 15) increases upwards, so that the cross-section of the individual ducts is widened upwards, in order partially to compensate for the increase in volume of the coolant evaporating out.

4. Nuclear reactor plant according to Claim 2 or 3, characterized in that the heat exchanger plates are grooved, and in that the depth of the grooving and the spacing between the grooves increase upwards continuously or in jumps.

5. Nuclear reactor plant according to one of Claims 1 to 4, characterized by a U-tube (110) with a first branch located in the pool and with a second branch reaching into the steam space under the steam dome (6).

6. Nuclear reactor plant according to one of Claims 1 to 5, characterized in that arranged above the steam dome is a shutdown vessel (111) which is maintained under negative pressure relative to the water level of the pool and which is connected to the cooling circuit via a flooding conduit (112) and contains a neutron-absorbing solution, in order to flood the cooling circuit with this solution in the event of an uncontrolled overproduction of steam, and in that the shutdown vessel (111) is connected to a ventilation conduit (113), the lower open end of which reaches into the steam dome, in such a way that, if the overproduction of steam forces the water out of the steam dome as far as the level of this lower open end, this end is exposed, thereby bringing about an automatic initiation of flooding.

7. Nuclear reactor plant according to Claim 6, characterized in that the flooding conduit (112) forms, under the steam dome, a syphon (115) which is not thermally insulated relative to the steam space under the dome, in order to form a steam trap which is in the state of readiness and is generated by a local exceeding of the saturation temperature and which prevents the flooding of the cooling circuit with the content of the shutdown vessel (111) until the shutdown operation is triggered.

8. Nuclear reactor plant according to Claim 6 or 7, characterized in that the ventilation conduit (113) has a first portion which extends as far as the upper gas-filled part of the shutdown vessel (111), and has a second portion which extends downwards as far as a region located constantly under pool water.

9. Nuclear reactor plant according to one of Claims 6 to 8, characterized in that there is a filling monitoring conduit (122) which connects the gas-filled space in the upper part of the shutdown vessel (111) to the dish under the steam dome in such a way that, if the dish runs empty as a result of leakages of the cooling circuit, the lower open end of this filling monitoring conduit (122) is exposed, in order to initiate the flooding of the cooling circuit from the shutdown vessel or the shutdown operation.

10. Nuclear reactor plant according to one of Claims 1 to 9, characterized in that a monitoring funnel, which is connected to the cooling circuit (2) of the plant via a conduit (123), is arranged in the region of the water level (7) of the pool.

## Revendications

1. Installation de réacteur nucléaire comprenant un réacteur nucléaire (1), qui, pour régler la puissance de l'installation par modification de la concentration des substances absorbant des neutrons dans le fluide de refroidissement, est située dans une piscine (5) refroidie par eau, et comportant une cloche à vapeur (6) ouverte vers le bas, dans l'espace intérieur de laquelle sont disposés un plateau (3) et un condenseur (8), le circuit de refroidissement du réacteur nucléaire (1) comprenant une première colonne montante (2), qui débouche à l'intérieur de la cloche à vapeur (6) dans une zone située au-dessus du plateau (3), et une canalisation de retour (4) qui revient du plateau au réacteur nucléaire, caractérisée en ce que pour améliorer la régulation de l'installation de réacteur nucléaire, il est prévu un échangeur de chaleur à plaques (9), de telle sorte que ladite première colonne montante (2) elle-même est agencée en tant que côté primaire et une autre colonne montante (10) est agencée en tant que côté secondaire de l'échangeur de chaleur à plaques (9), et qu'une extrémité de cette autre colonne montante (10) est située dans l'eau de la piscine et que son autre extrémité est située dans l'espace intérieur de la cloche à vapeur (6), dans une zone située au-dessous du plateau (3).

2. Installation de réacteur nucléaire selon la revendication 1, caractérisée en ce que l'échangeur de chaleur à plaques (9) sert à stabiliser la circulation naturelle et à diluer le fluide du circuit du fluide réfrigérant par formation de vapeur, les espaces intercalaires entre les plaques (11,15) étant subdivisés par des éléments d'étanchéité (13,14) de manière à former des canaux parallèles.

3. Installation de réacteur nucléaire selon la revendication 2, caractérisée en ce que la distance entre les plaques (11,15) augmente vers le haut de sorte que la section transversale des différents canaux s'élargit vers le haut pour compenser en partie l'accroissement de volume du fluide de refroidissement qui passe à l'état de vapeur.

4. Installation de réacteur nucléaire selon la revendication 2 ou 3, caractérisée en ce que les plaques de l'échangeur de chaleur sont rainurées et que la profondeur des rainures et la distance entre les rainures augmentent continûment ou brusquement vers le haut.

5. Installation de réacteur nucléaire selon l'une des revendications 1 à 4, caractérisée par un tube en U (110) comprenant une première branche, qui est située dans la piscine, et une seconde branche, qui pénètre dans l'espace contenant la vapeur au-dessous de la cloche à vapeur (6).

6. Installation de réacteur nucléaire selon l'une des revendications 1 à 5, caractérisée en ce qu'au-dessus de la cloche à vapeur est disposé un réservoir d'arrêt d'urgence (111), qui est maintenu en dépression par rapport au niveau d'eau de la piscine et qui est relié au circuit de refroidissement par l'intermédiaire d'une canalisation de noyage (112) et contient une solution absorbant les neutrons, de manière à noyer le circuit de refroidissement avec cette solution dans le cas d'une surproduction incontrôlée de vapeur, et que le réservoir d'arrêt d'urgence (111) est relié à une canalisation d'aération (113), dont l'extrémité inférieure ouverte pénètre dans la cloche à vapeur de telle sorte que, lorsque la surproduction de vapeur refoule l'eau hors de la cloche à vapeur jusqu'au niveau de cette extrémité inférieure ouverte, cette extrémité est dégagée, ce qui réalise un déclenchement automatique du noyage.

7. Installation de réacteur nucléaire selon la revendication 6, caractérisée en ce que la canalisation de noyage (112) forme au-dessous de la cloche à vapeur, un siphon (115), qui n'est pas isolé thermiquement par rapport à l'espace de vapeur au-dessous de la cloche, de manière à former un barrage pour la vapeur, situé dans un état prêt à fonctionner et produit par un dépassement local de la température de saturation et qui empêche le noyage du circuit de refroidissement par le contenu du réservoir d'arrêt d'urgence (111) jusqu'au déclenchement du processus d'arrêt d'urgence.

8. Installation de réacteur nucléaire selon la revendication 6 ou 7, caractérisée en ce que la canalisation d'aération (113) possède une première section, qui s'étend jusqu'à la partie supérieure, remplie de gaz, du réservoir d'arrêt d'urgence (111), ainsi qu'une seconde section, qui s'étend vers le bas jusqu'à une zone située en permanence au-dessous de l'eau de la piscine.

9. Installation de réacteur nucléaire selon l'une des revendications 6 à 8, caractérisée en ce qu'il est prévu une canalisation de commande de remplissage (122), qui relie l'espace rempli de gaz dans la partie supérieure du réservoir d'arrêt d'urgence (111) au plateau situé au-dessous de la cloche à vapeur de telle sorte que dans le cas du fonctionnement à vide du plateau en raison de fuites du circuit de refroidissement, l'extrémité inférieure ouverte de cette canalisation de contrôle de remplissage (122) est libérée, de manière à déclencher le noyage du circuit de refroidissement à partir du réservoir d'arrêt d'urgence ou l'opération d'arrêt d'urgence.

10. Installation de réacteur nucléaire selon l'une des revendications 1 à 9, caractérisée en ce qu'au voisinage de la surface (7) de l'eau de la piscine est disposé un entonnoir de contrôle, qui est relié par l'intermédiaire d'une canalisation (123) au circuit de refroidissement (2) de l'installation.
